# FASCICULE DE BREVET EUROPEEN

(11) **EP 0 827 890 B1**
(45) Date de publication et mention de la délivrance du brevet: **24.07.2002**
(21) Numéro de dépôt: 97401990.3
(22) Date de dépôt: 27.08.1997
(51) Int. Cl.: B62B 7/14

(54) **Dispositif d'accrochage d'une nacelle sur une poussette pour enfant, poussette équipée d'un tel dispostif, support pour enfant équipé d'un tel dispositif**
Kuppelungsvorrichtung eines Wagenkastens an einem Kinderwagen, Kinderwagen mit einer solchen Vorrichtung, Wagenkastten mit einer solchen Vorrichtung
Coupling means between a bed and a pushchair, a pushchair equipped with said coupling means, a bed equipped with said coupling means.

(30) Priorité: 10.09.1996 FR 9611035; 07.07.1997 FR 9708615
(43) Date de publication de la demande: 11.03.1998
(73) Titulaire: Ampafrance S.A., 49309 Cholet Cedex (FR)
(72) Inventeur: Ageneau, Laurent, 49300 Cholet, (FR)
(74) Mandataire: Casalonga, Axel

(56) Documents cités:
- EP-A- 0 339 890
- DE-C- 4 137 575

## Description

La présente invention a pour objet un dispositif d'accrochage une nacelle sur une poussette pour enfant, permettant de mettre et d'enlever la nacelle de la poussette de façon simple et sûre. On entend par nacelle tout objet capable de recevoir un enfant tel qu'un lit, un berceau, un siège, etc., et susceptible d'être installé sur une poussette.

On connaît différents types de poussettes pour enfant. Selon un premier type, illustré en particulier par le brevet français 2 693 162 (AMPAFRANCE), la poussette est pourvue d'un châssis pliable et d'une nacelle en toile maintenue par des tiges. Le pliage de la poussette est très satisfaisant et la nacelle peut pivoter, par exemple pour pouvoir offrir une position assise et une position couchée. Toutefois, le besoin est apparu de pouvoir ôter la nacelle du châssis de la poussette, notamment si l'on utilise comme nacelle un berceau à coque rigide non repliable. Il faut alors ôter le berceau de la poussette avant de replier celle-ci.

On connaît également par la demande de brevet européen n° 0 339 890 (HESTAIR MACLAREN) un second type de poussette comprenant un châssis supportant un siège inclinable par rapport au châssis et qui peut être ôté et remis sur le châssis. Le châssis est pourvu de deux supports latéraux de siège, en forme de V renversé et pourvus de nervures sur leurs bords. Le siège comprend deux pièces latérales pourvues d'un creux central en forme de V renversé pour coopérer avec un support du châssis et de deux rainures dans lesquelles les nervures du support peuvent entrer. Un tel système est relativement fragile, instable avant verrouillage si l'on exerce une traction ou un appui sur une extrémité du siège et peu aisé à manipuler. En effet, les nervures des supports et les nervures des pièces du siège sont de faibles dimensions, ce qui, outre leur fragilité, exige de l'opérateur souhaitant remettre un siège sur la poussette qu'il positionne de façon précise et simultanée, chaque pièce du siège au-dessus du support correspondant du châssis de la poussette. Faute d'une telle précision de positionnement, une ou les deux pièces du siège risquent de ne pas s'enclencher avec les nervures des supports correspondants et l'opérateur risque de faire tomber le siège par terre.

Par ailleurs, la forme des supports exige que le mouvement de montage ou de démontage du siège sur le châssis de la poussette soit sensiblement perpendiculaire à la position de la nacelle. Ainsi, si les supports sont dans une position telle que le siège une fois installé est horizontal, le mouvement du siège doit être sensiblement vertical. Lorsque la position des supports est telle que le siège une fois installé est incliné, le mouvement d'installation du siège sur le châssis doit être sensiblement perpendiculaire à l'angle d'inclinaison futur du siège. On voit donc que l'installation du siège sur le châssis devient particulièrement délicate, l'opérateur devant à la fois positionner latéralement chaque pièce du siège par rapport au support correspondant et positionner le siège avec une inclinaison telle que l'installation soit possible. Un autre inconvénient de ce type de poussette est que les boutons de commande de l'inclinaison du siège et de son déverrouillage en vue de l'enlever du châssis de la poussette, sont extrêmement proches, ce qui peut conduire un utilisateur à les confondre.

La présente invention a pour objet la réalisation d'un dispositif d'accrochage d'une nacelle sur une poussette permettant à la nacelle d'être stable même non verrouillée, qui soit suffisamment robuste et dans lequel la nacelle, lors de son installation, est guidée par rapport au châssis de façon à diminuer considérablement les risques de chute de la nacelle et par conséquent de l'enfant qui s'y trouve.

Le dispositif d'accrochage d'une nacelle sur une poussette pour enfant, selon l'invention, est du type comprenant un châssis reposant sur des moyens de roulement et pourvu de deux pièces de support disposées de part et d'autre de la nacelle. Le dispositif comprend deux éléments d'accrochage coopérant chacun avec une pièce de support dudit châssis. Chaque élément d'accrochage comprend au moins un ergot en saillie capable de coopérer avec au moins un logement de la pièce de support, en concordance de forme avec l'ergot. On obtient ainsi une nacelle stable naturellement par rapport au châssis même avant le verrouillage.

L'ergot comprend au moins deux portions d'ergot et le logement comprend au moins deux portions de logement.

Dans un mode de réalisation de l'invention, l'ergot comprend un moyen de guidage de l'entrée de l'ergot dans le logement, sous la forme d'une portion inférieure oblique de l'ergot. Cette portion inférieure de l'ergot est capable de faire saillie sous le logement. Ainsi, une nacelle présentée au-dessus du châssis sans précision particulière viendra se fixer sur celui-ci sans risque de chute.

Dans un mode de réalisation de l'invention, l'ergot comprend un moyen de blocage de l'ergot dans le logement, sous la forme d'une portion supérieure cylindrique dudit ergot. Si, par inattention, un opérateur tente d'appuyer ou de soulever une extrémité de la nacelle, la portion supérieure de l'ergot se coincera dans le logement empêchant toute déstabilisation de la nacelle.

Dans un mode de réalisation de l'invention, les pièces de support comprennent un moyen de guidage latéral de l'entrée de l'ergot dans le logement, sous la forme d'une lèvre s'étendant à partir d'un bord supérieur de la pièce de support vers le haut et vers le centre de la nacelle, et des surfaces de guidage longitudinal disposées de chaque côté de l'ergot, et les éléments d'accrochage comprennent un moyen de guidage latéral de l'entrée de l'ergot dans le logement, sous la forme de portions biseautées disposées sur une face latérale.

Dans un mode de réalisation de l'invention, les éléments d'accrochage comprennent une protubérance latérale du côté du châssis coopérant avec un creux de la pièce de support de façon à limiter le jeu entre la nacelle et le châssis. Les protubérances latérales peuvent être de forme arrondie pour faciliter leur entrée dans leurs creux respectifs.

De préférence, le dispositif comprend des moyens de commande de moyens de verrouillage de l'élément d'accrochage sous la forme d'un bouton de commande à actionnement linéaire prévu avec une position inactive et une position active enfoncée maintenant les moyens de verrouillage déverrouillés tant que l'élément d'accrochage reste disposé dans le logement de la pièce de support.

Avantageusement, les pièces de support comprennent des moyens de commande de moyens de verrouillage de l'élément d'accrochage, disposés du côté de la nacelle et comprenant une palette articulée sur ladite pièce de support et dont le basculement commande le verrouillage et le déverrouillage de l'élément d'accrochage. Comme les boutons de commande de l'inclinaison de la nacelle sont en général disposés sur les côtés extérieurs du châssis et non pas entre le châssis et la nacelle, on réduit le risque de confusion entre la commande de verrouillage et la commande d'inclinaison.

Dans un mode de réalisation de l'invention, au moins un élément d'accrochage comprend au moins un creux formé sur une paroi latérale d'un ergot et prévu pour coopérer avec un moyen de verrouillage comprenant au moins une protubérance solidaire de la palette et capable de faire saillie à travers un perçage d'un bord d'un logement de la pièce de support, dans ledit logement. Le rôle de la palette de commande apparaît immédiatement à l'opérateur, ce qui permet de réduire le risque d'erreur de manipulation.

Dans un mode de réalisation de l'invention, la protubérance est biseautée de façon que l'entrée de l'ergot dans le logement correspondant provoque le retrait de la protubérance et le basculement de la palette.

Dans un mode de réalisation de l'invention, les pièces de support comprennent un dispositif de basculement de la nacelle équipé de moyens de commande montés de part et d'autre du châssis.

Dans une variante, au moins un des ergots d'au moins un élément d'accrochage fait saillie partiellement sous une paroi d'une extrémité d'un logement de façon à empêcher la sortie dudit ergot de son logement avant la sortie de l'autre ergot du même élément d'accrochage de son logement. L'enlèvement de la nacelle du châssis exige alors un mouvement en deux temps, un premier temps pour sortir l'autre ergot et un deuxième temps pour sortir le premier ergot, ce qui réduit le risque de mauvaise manipulation de la nacelle.

Dans un mode de réalisation de l'invention, les éléments d'accrochage comprennent deux ergots supplémentaires.

L'élément d'accrochage peut se présenter sous la forme d'un adaptateur incluant un moyen de maintien d'un siège équipé d'un autre type d'accrochage. Le moyen de maintien peut comprendre une fourchette en saillie vers le haut.

La présente invention a également pour objet une poussette pour enfant équipée d'un tel dispositif d'accrochage de nacelle, et un support pour enfant équipé d'un tel dispositif d'accrochage. On entend par support tout élément capable de recevoir un enfant en position assise ou couchée tel que lit, berceau, siège, porte-enfant pour automobiles etc...

Bien entendu, le châssis de la poussette peut être de tout type connu, pliant ou non, et le support peut également être de nombreux types différents, par exemple un siège en toile maintenu par un cadre tubulaire, un siège rigide pouvant également être utilisé comme siège de voiture, un siège semi-rigide repliable, un berceau à coque rigide, etc...

L'invention sera mieux comprise à l'étude de la description détaillée de modes de réalisation pris à titre d'exemples nullement limitatifs et illustrés par les dessins annexés, sur lesquels :
la figure 1 est une vue avant en élévation d'une poussette équipée d'un dispositif d'accrochage selon l'invention;
la figure 2 est une vue de dessus en élévation d'une pièce de support d'un dispositif d'accrochage selon l'invention;
la figure 3 est une vue de face en élévation de la même pièce de support que la figure 2;
la figure 4 est une vue en perspective d'un élément d'accrochage d'un dispositif d'accrochage selon l'invention;

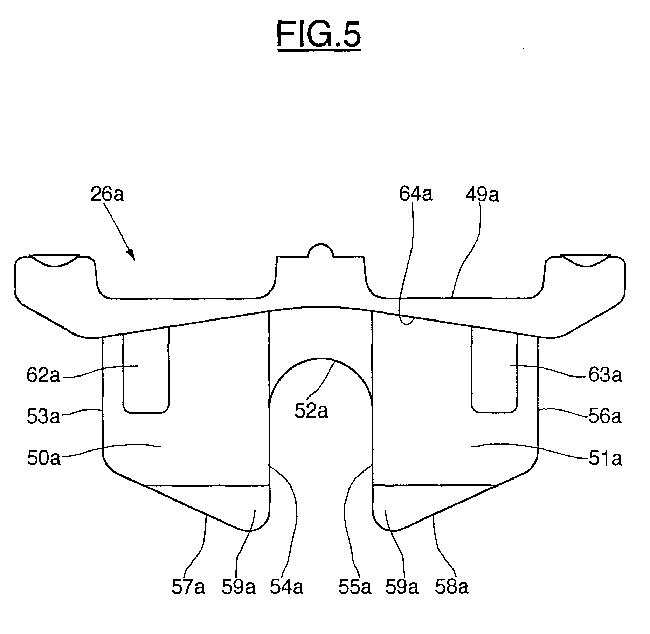

la figure 5 est une vue de derrière en élévation de l'élément de la figure 4;
la figure 6 est une vue de face en élévation d'une variante de l'élément d'accrochage de la figure 4;
la figure 7 est une variante de la figure 4;
la figure 8 est une vue en perspective d'une bague de verrouillage;

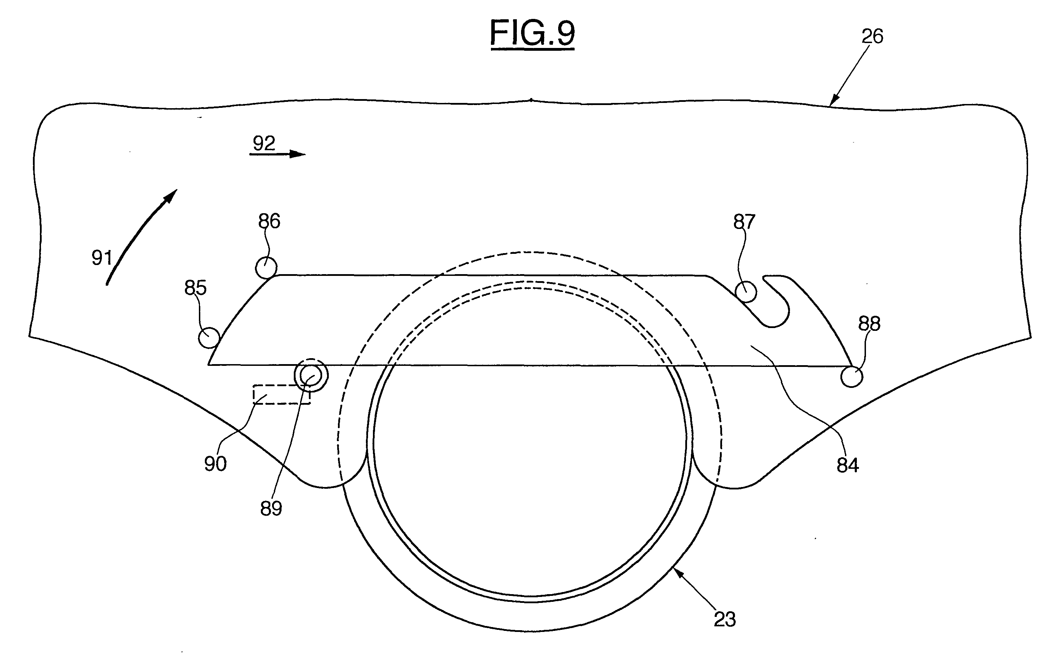

la figure 9 est une vue schématique de côté d'un autre mode de réalisation de l'invention; et
la figure 10 est une vue en perspective d'une variante d'un dispositif d'accrochage.

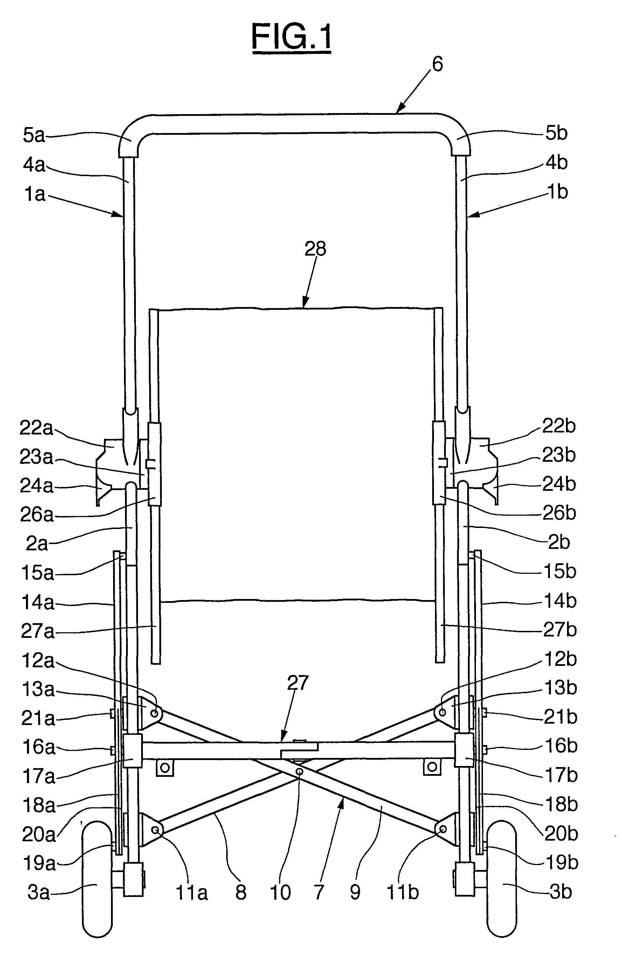

Telle qu'elle est illustrée sur la figure 1, la poussette comprend deux ensembles latéraux de châssis référencés 1a et 1b dans leur ensemble. Ces deux ensembles latéraux de châssis sont identiques et on décrira les éléments qui constituent l'ensemble latéral 1a qui seront affectés de l'indice de référence a, étant entendu que l'ensemble latéral de châssis 1b présente les mêmes éléments qui seront affectés de l'indice de référence b.

L'ensemble latéral de châssis 1a comporte un piètement avant 2a et un piètement arrière non visible sur la figure 1. Le piètement avant 2a présente à son extrémité inférieure un axe pour une roue avant 3a, ou dans une variante, un bloc-roue constitué de deux roues.

Toujours faisant partie de l'ensemble latéral de châssis 1a, on trouve un bras-poussoir 4a qui présente à son extrémité supérieure une zone de préhension coudée horizontalement 5a. On notera que les zones de préhension respectives 5a, 5b des deux bras-poussoirs 4a, 4b sont reliées entre elles de façon à former un guidon transversal référencé 6 dans son ensemble.

A la partie arrière de la poussette se trouve un châssis 7 en forme d'X articulé, constitué par une branche 8 et une branche 9 articulées en leur milieu par l'axe 10 de façon à présenter la forme d'un X. Les extrémités inférieures des branches 8 et 9 peuvent pivoter autour d'axes 11a, 11b fixes par rapport aux piètements arrière au voisinage de l'extrémité inférieure de ces derniers. Les extrémités supérieures des branches 8 et 9 sont articulées autour des axes 12a, 12b solidaires de manchons coulissants 13a, 13b qui sont traversés de façon coulissante par les piètements arrières respectifs.

Tous ces éléments peuvent être avantageusement réalisés sous la forme de tubes métalliques, par exemple en alliage léger. Une bielle de liaison 14a est articulée à son extrémité supérieure sur l'axe 15a solidaire de l'extrémité inférieure du bras-poussoir 4a. Au voisinage de son extrémité inférieure, la bielle de liaison 14a est articulée sur un axe 16a solidaire de la partie inférieure du piètement arrière. On notera que l'axe 16a est monté, dans l'exemple illustré, sur un manchon 17a fixe par rapport au piètement arrière et fixé entre les axes 11a et 12a des branches 8 et 9 du châssis arrière en X 7 dans la position complètement déployée de la poussette. La bielle de liaison 14a se poursuit au-delà de son axe d'articulation 16a par une prolongation 18a munie à son extrémité inférieure d'un axe d'articulation 19a par rapport auquel peut pivoter une biellette de commande 20a, dont l'extrémité supérieure est articulée par l'axe 21a sur le manchon coulissant 13a qui est solidaire de l'extrémité supérieure de la branche 9 du châssis arrière en X 7.

La même disposition se retrouve sur l'élément de châssis latéral b, la biellette de commande correspondante 20b étant articulée sur le manchon coulissant 13b solidaire de l'extrémité supérieure de la branche 8 du châssis 7. Les bielles de liaison 14a et 14b et les biellettes de commande associées 20a et 20b sont disposées, de préférence, à l'extérieur des éléments de châssis latéraux 1a et 1b entre ceux-ci et les roues arrière et sont constituées par des tringles en fer plat afin de réduire l'encombrement de l'ensemble tout en lui conférant une excellente rigidité.

Dans l'ensemble latéral de châssis 1a, se trouve également disposé un manchon coulissant 22a à travers lequel peuvent passer en y coulissant librement, le piètement avant 2a et le bras-poussoir 4a. Le manchon 22a au même titre que le manchon similaire 22b de l'ensemble latéral de châssis 1b, peut occuper une position de butée haute dans la position complètement déployée de la poussette illustrée sur la figure 1. Il peut également occuper une position de butée basse définie par une butée, non représentée, placée sur le piètement avant 2a et ce dans la position complètement repliée de la poussette et au cours du pliage. Le manchon 22a est pourvu d'une pièce de support 23a disposée à l'intérieur du châssis 1a, 1b. Le manchon 22a supporte également un levier de commande 24a disposé à l'extérieur du châssis 1a, 1b.

La poussette comprend encore un repose-pieds rigide 27 pourvu de deux branches repliables articulées par un axe central.

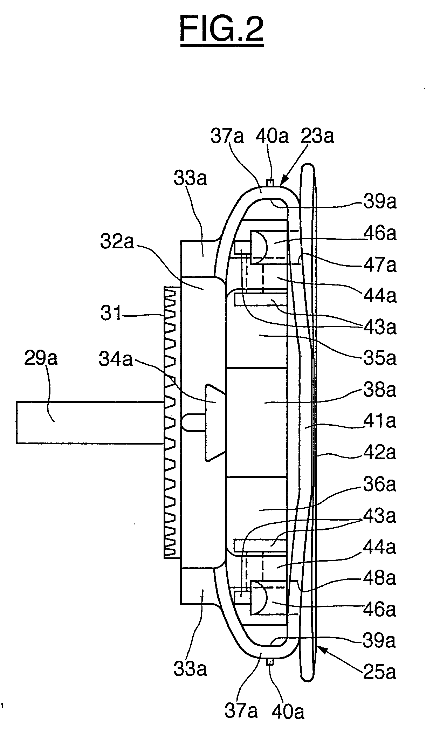

Le manchon 22a et la pièce de support 23a (figure 2) reçoivent un élément d'accrochage 26a solidaire d'une tige 27a qui peut recevoir une toile ou analogue formant une nacelle de réception de l'enfant 28.

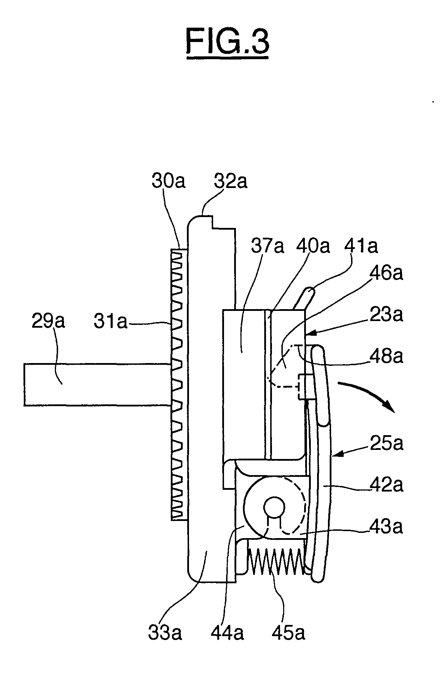

Telle qu'elle est illustrée sur les figures 2 et 3, la pièce de support 23a est destinée à être insérée au centre du manchon 22a et à recevoir un élément d'accrochage 26a (figure 1). La pièce de support 23a comprend un axe 29a capable de coopérer avec un trou de diamètre correspondant, non représenté, du manchon. A l'extrémité de l'axe 29a du côté de la nacelle, la pièce de support 23a comprend une couronne 30a de diamètre largement supérieur à celui de l'axe 29a et pourvue sur sa face du côté de l'axe 29a d'une pluralité de dents 31 régulièrement espacées et capables de coopérer avec des dents correspondantes du manchon de façon à pouvoir régler l'inclinaison de la nacelle 28 par rapport aux manchons 22a et 22b et par conséquent à l'ensemble de la poussette.

Pour faire varier l'inclinaison de la nacelle 28, on actionne tout d'abord les leviers 24a et 24b dont l'extrémité disposée à l'intérieur des manchons 22a et 22b tend à chasser les pièces de support 23a et 23b vers l'intérieur et à libérer les dents 31 des dents correspondantes des manchons 22a et 22b. On peut ainsi modifier l'inclinaison de la nacelle 28, par exemple entre la position assise et la position allongée. Une fois la position souhaitée obtenue, on verrouille les leviers 24a et 24b, ce qui provoque un mouvement des pièces de support 23a et 23b vers l'extérieur de la poussette et le réenclenchement des dents 31 dans les dents correspondantes des manchons 22a et 22b.

La pièce de support 23a comprend une portion cylindrique 32a adjacente à la couronne 30a du côté opposé aux dents 31. La portion cylindrique 32a comprend deux renflements 33a formant des coins et disposés dans le bas de la pièce de support 23a. La portion cylindrique 32a comprend également du côté opposé à la couronne 30a un logement radial 34a à bords obliques.

A proximité de la portion cylindrique 32a, du côté opposé à la couronne 30a, la pièce de support 23a définit deux portions de logements sensiblement cylindriques 35a et 36a. Les portions de logements 35a et 36a sont délimitées par le bord 37a de la pièce de support 23a et par une portion centrale 38a coaxiale à la portion cylindrique 32a, à la couronne 30a et à l'axe 29a. Les parois internes 39a des portions de logements 35a et 36a sont cylindriques et parallèles entre elles de façon à pouvoir coopérer avec l'élément d'accrochage 26a avec un jeu réduit. Toutefois, les extrémités des portions de logements 35a et 36a opposées à la portion centrale 38a sont légèrement resserrées dans le bas desdites portions de logements pour être en concordance de forme avec l'élément d'accrochage. A proximité de la portion centrale 38a, le bord 37a de la pièce de support 23a est plié vers l'extérieur de façon à former une lèvre 41a capable de faciliter l'entrée de l'élément d'accrochage 26a dans les portions de logements 35a et 36a de la pièce de support 23a et s'étendant vers le haut et vers le centre de la nacelle.

Deux nervures 40a sont disposées à chaque extrémité du bord 37a, parallèlement aux parois 39a et à l'extérieur des logements 35a et 36a.

La pièce de support 23a comprend également une palette de commande 25a pourvue d'une plaque plane 42a disposée en contact avec le bord 37a du côté opposé à la portion cylindrique 32a et de chapes 43a disposées par paires à chaque extrémité du bas de la plaque 42a et articulées sur deux chapes correspondantes 44a solidaires des renflements 33a de la portion cylindrique 32a, autour d'un axe commun. La palette peut ainsi basculer dans le sens de la flèche de la figure 3. Sous les chapes 43a, 44a est prévu un ressort 45a disposé entre la portion cylindrique 32a et la plaque 42a et exerçant un effort s'opposant au basculement dans le sens précité. La palette 25a comprend aussi deux protubérances 46a en forme de crochets disposées sur la plaque 42a du côté du bord 37a et faisant saillie dans les portions de logements 35a, 36a à travers des perçages 47a, 48a du bord 37a, en position de repos.

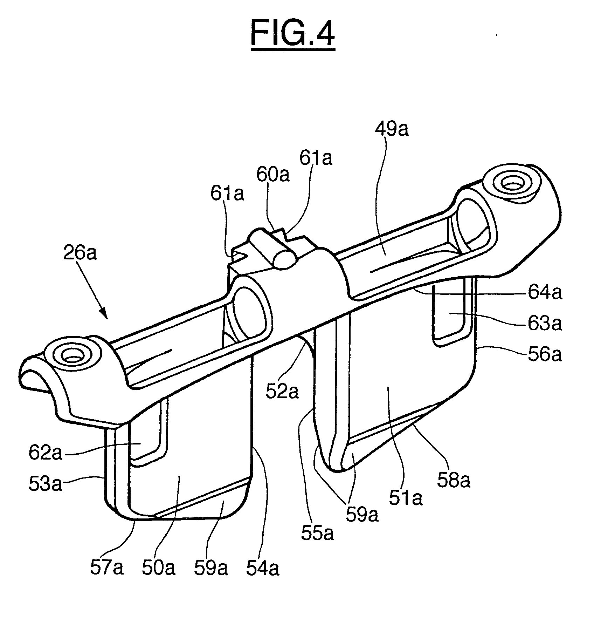

Comme on peut le voir sur la figure 4, l'élément d'accrochage 26a comprend une portion supérieure tubulaire 49a capable de recevoir la tige 27a de la nacelle 28 (figure 1). Deux portions d'ergots 50a et 51a s'étendent à partir de la portion tubulaire 49a vers le bas. Les portions d'ergots 50a et 51a sont séparées par un creux de forme arrondie 52a. Les parois 53a, 54a de la portion d'ergot 50a et 55a, 56a de la portion d'ergot 51a sont cylindriques de façon à ce que les portions d'ergots 50a et 51a puissent venir s'emboîter étroitement dans les portions de logements 35a et 36a de la pièce de support 23a illustrée sur les figures 2 et 3. Les portions d'ergots 50a et 51a sont également pourvues à proximité de leur extrémité inférieure, de portions obliques 57a, 58a destinées à guider l'élément d'accrochage 26a par rapport à la pièce de support 23a et de dimensions telles qu'elles fassent saillie sous leurs portions de logements 35a, 36a. Les portions d'ergots 50a, 51a sont pourvues sur leurs deux faces latérales de portions biseautées 59a destinées au guidage latéral de l'élément d'accrochage 26a par rapport à la pièce de support 23a.

L'élément d'accrochage 26a comprend une protubérance latérale 60a disposée au-dessus du creux 52a séparant les deux portions d'ergots 50a et 51a. La protubérance 60a est de forme concordante à celle du logement 34a de la pièce de support 23a. La protubérance 60a est de forme arrondie à son extrémité inférieure, non visible sur la figure 4, de façon à faciliter la coopération de ladite protubérance et du logement 34a de la pièce de support 23a. La protubérance 60a est en forme de queue d'aronde avec des bords obliques verticaux 61a coopérant avec les bords correspondants du logement 34a. Les portions d'ergots 50a et 51a sont pourvues de creux 62a, 63a disposés entre les portions biseautées 59a et la portion tubulaire 49a et prévus pour coopérer avec les protubérances 46a de la palette de verrouillage 25a.

La portion tubulaire 49a comprend une découpe 64a du côté des creux 62a, 63a et dont la forme est prévue pour s'adapter à celle de la lèvre 41a du bord 37a de la pièce de support 23a (figure 3).

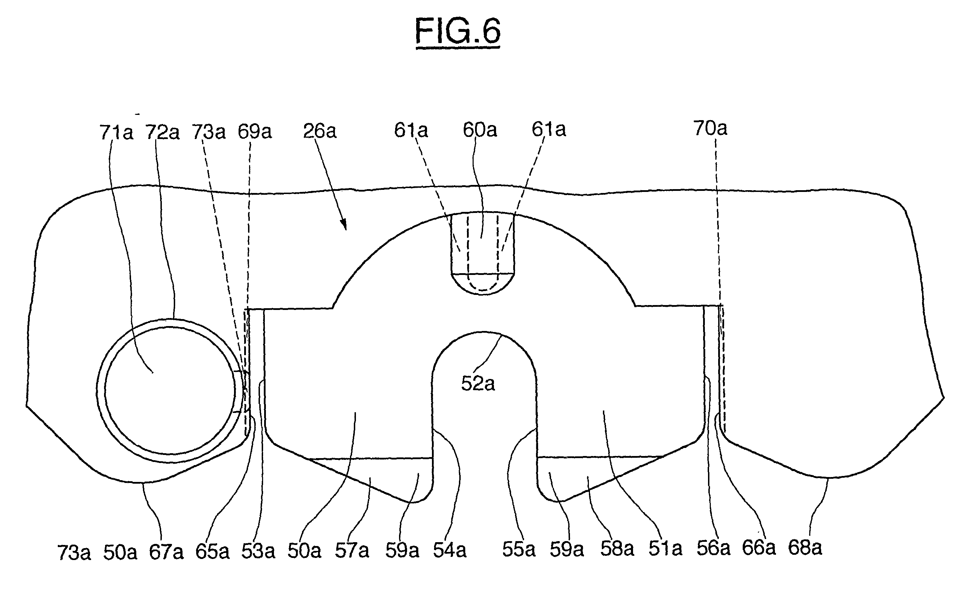

L'élément d'accrochage 26a illustré sur la figure 6 est particulièrement adapté à un siège pourvu d'une coque rigide. L'élément d'accrochage 26a comprend des surfaces planes 65a et 66a disposées respectivement parallèlement et en regard des parois 53a et 56a des portions d'ergot 50a et 51a et se prolongeant par des surfaces de guidage 67a et 68a obliques à l'opposé des portions d'ergot 50a et 51a. Les surfaces de guidage 67a et 68a sont capables d'entrer en contact avec le bord 37a (figures 2 et 3) lors de l'introduction de l'élément d'accrochage 26a dans une pièce de support 23a. Des rainures 69a et 70a sont prévues dans les surfaces planes 65a et 66a pour coopérer avec les nervures 40a de la pièce de support 23a en participant au guidage.

Un bouton de commande 71a est prévu dans un perçage 72a à proximité de la surface plane 65a et est pourvu d'une protubérance latérale 73a qui, lors d'un mouvement d'enfoncement dudit bouton 71a, est capable de s'encliqueter derrière la nervure 40a d'une pièce de support 23a, et est retenu par ladite nervure 40a tant que l'élément d'accrochage 26a reste sur sa pièce de support 23a. Lorsqu'on ôte l'élément d'accrochage 26a, la protubérance 73a se désengage de la nervure 40a et le bouton 71a reprend sa position initiale inactive sous l'action d'un ressort non représenté.

Le fonctionnement du dispositif d'accrochage est le suivant. Lorsque la nacelle 28 est installée sur la poussette et que l'on cherche à l'enlever, on vient tout d'abord basculer la palette 25a de façon à dégager les protubérances 46a des creux 62a, 63a dans lesquels elles font saillie.

On remarque que dans cette position de déverrouillage de la palette 25a, l'élément d'accrochage 26a reste stable par rapport à la pièce de support 23a en raison de l'effet de blocage des surfaces verticales 53a, 54a, 55a et 56a des portions d'ergots 50a et 51a sur les parois correspondantes 39a et 40a des portions de logements 35a et 36a de la pièce de support 23a et des parois obliques 61a de la protubérance 60a sur les parois correspondantes du logement 34a. Par exemple, si l'on appuie sur l'extrémité basse de la tige 27a de la nacelle 28, l'élément d'accrochage 26a va avoir tendance à venir en appui sur le bord 37a de la portion de logement 36a. Ce début de pivotement provoquera le coincement de la paroi verticale 55a contre la portion centrale 38a et de la paroi verticale 53a contre la paroi 39a de la portion de logement 35a. Ce blocage empêche tout désengagement intempestif de l'élément d'accrochage 26a de la pièce de support 23a. Il en est de même, pour des raisons similaires, si l'on tente de soulever l'extrémité inférieure de la tige 27a de la nacelle 28.

Pour enlever la nacelle 28, il faut alors saisir la tige 27a à proximité de l'élément d'accrochage 26a et la tirer dans une direction perpendiculaire à ladite tige 27a. On parvient ainsi à enlever l'élément d'accrochage 26a de la pièce de support 23a quelle que soit son orientation. On procède de même avec l'élément d'accrochage 26b. Les opérations de basculement de la palette 25a et de saisie de la tige 27a peuvent être effectuées d'une seule main et simultanément.

En sens inverse, lorsque l'on veut installer la nacelle 28 sur la poussette, on vient présenter l'élément d'accrochage 26a au-dessus de la pièce de support 23a si possible avec la même inclinaison. Toutefois, si on vient présenter l'élément d'accrochage 26a horizontal alors que la pièce de support 23a est oblique de ± 10°, les surfaces obliques 57a, 58a des portions d'ergots 50a, 51a permettent à l'élément d'accrochage 26a de prendre une bonne position par rapport à l'élément de support 23a. Les portions d'ergots 50a et 51a, lorsqu'elles sont présentées à proximité des portions de logements 35a et 36a, sont guidées latéralement par la lèvre 41a de la pièce de support 23a qui tend à les faire rentrer dans leurs portions de logements respectives 35a et 36a et évite une chute éventuelle de la nacelle 28. La lèvre 41a coopère avec les portions biseautées 59a prévues sur les portions d'ergots 50a et 51a et permet de rattraper un défaut d'alignement de l'ordre de ± 5°. Dans le sens longitudinal, les portions d'ergots 50a et 51a sont guidées par rapport à leurs portions de logements 35a et 36a par leurs surfaces obliques 57a et 58a. Il en est de même pour l'installation de l'élément d'accrochage 26b sur la pièce de support 23b. Ainsi, l'opérateur peut présenter la nacelle 28 avec une marge d'erreur latérale, longitudinale et angulaire relativement importante sans risque de chute de ladite nacelle 28.

Une fois que les portions d'ergots 50a et 51a ont commencé leur entrée dans leurs portions de logements respectives 35a et 36a, la protubérance latérale 60a entre dans le logement 34a de la pièce de support 23a et les portions biseautées 59a entrent en contact avec les protubérances 46a de la palette 25a et les repoussent progressivement, ce qui provoque le basculement de la palette 25a et la compression du ressort 45a. Une fois le mouvement de l'élément d'accrochage 26a terminé, les protubérances 46a font irruption dans les creux 62a, 63a des portions d'ergots 50a, 51a et la palette 25a reprend sa position initiale, ce qui empêche tout mouvement ultérieur de l'élément d'accrochage 26a par rapport à sa pièce de support 23a.

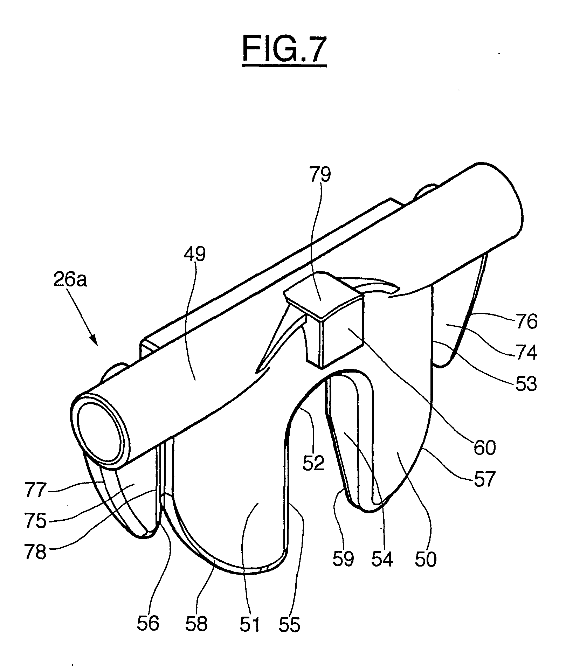

Sur la figure 7, l'élément d'accrochage comprend également deux ergots supplémentaires 74 et 75 de part et d'autre des portions d'ergots 50 et 51 et dont les faces extérieures 76 et 77 sont arrondies. La face 78 de l'ergot supplémentaire 75 adjacente à la paroi 56 de la portion d'ergot 51 est verticale et est disposée à une distance de la paroi 56 qui correspond à l'épaisseur du bord 37 de la pièce de support 23. La protubérance 60 est pourvue d'une surface supérieure 79 arrondie.

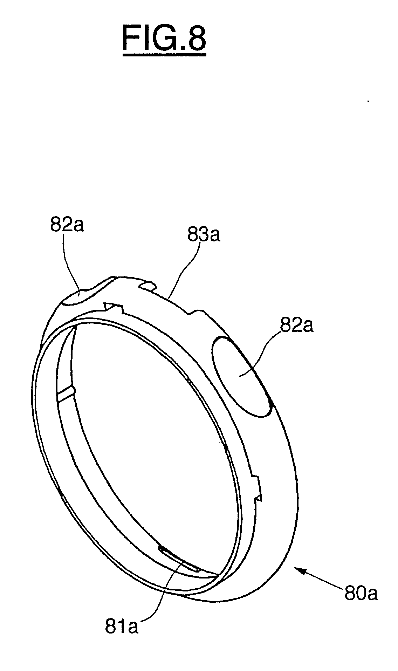

Le manchon 22a peut également être prévu avec une bague de verrouillage 80a illustrée sur la figure 8 et entourant la portion cylindrique 32a de la pièce de support 23a qui est alors dépourvue de renflements.

La bague 80a est de forme généralement annulaire et comprend sur son alésage au moins un ergot 81a en saillie radialement vers l'intérieur, capable de coopérer, lorsque la bague 80a est montée sur la portion cylindrique 32a de la pièce de support 23a, avec une rainure non représentée de façon à limiter le déplacement angulaire de la bague 80a par rapport à la pièce de support 23a. Sur son pourtour extérieur, la bague 80a comprend des zones 82a destinées à éviter que les doigts de l'opérateur ne glissent sur ladite bague 80a et qui peuvent être recouvertes de stries, de bossages ou de tout autre moyen destiné à éviter le glissement. Sur le côté de la bague 80a adjacent aux logements 35a et 36a de la pièce de support 23a, est prévu une échancrure latérale 83a. L'échancrure 83a est de profondeur sensiblement égale à celle du logement 34a prévu dans la pièce de support 23a.

Le fonctionnement du dispositif d'accrochage est le suivant. Lorsque la nacelle 28 est installée sur la poussette et que l'on cherche à l'enlever, on vient tout d'abord tourner la bague 80a de façon à aligner l'échancrure 83a de ladite bague 80a et le logement 34a de la pièce de support 23a dans lequel fait saillie la protubérance 60 de l'élément d'accrochage 26a. En effet, lorsque l'échancrure 83a et le logement 34a sont désalignés, la bague 80a recouvre radialement le logement 34a et empêche tout mouvement de la protubérance 60 et par conséquent de l'élément d'accrochage 26a.

Pour des raisons de sécurité, il peut s'avérer intéressant de contraindre l'utilisateur à séparer la nacelle de la poussette par un double mouvement, par exemple rotation puis translation de l'une par rapport à l'autre. Comme illustré sur la figure 7, on peut prévoir une pièce de support 23 pourvue d'une barre de verrouillage 84 supportant l'élément d'accrochage 26 par l'intermédiaire de points de contact fixes 85, 86, 87 et 88 et d'un verrou mobile 89. Le verrou mobile 89 est commandé par une came 90 elle-même actionnée par un moyen de commande. Lorsque le verrou 89 est en saillie, en position active, l'élément d'accrochage 26 est immobilisé par rapport à la barre 84 Lorsque l'on provoque le retrait du verrou 89 en position inactive, on peut séparer l'élément d'accrochage 26 de la barre 84, tout d'abord en soulevant l'élément d'accrochage 26 à proximité des points de contact 85 et 86, en la faisant pivoter autour du point de contact 88, puis par un mouvement de translation éloignant les points de contact 87 et 88 de la barre 84. On sépare l'élément d'accrochage 26 de la pièce de support 23 tout d'abord par un mouvement selon la flèche 91, puis par un mouvement selon la flèche 92. Lorsque l'on veut remettre la nacelle sur la poussette, on effectue l'opération inverse.

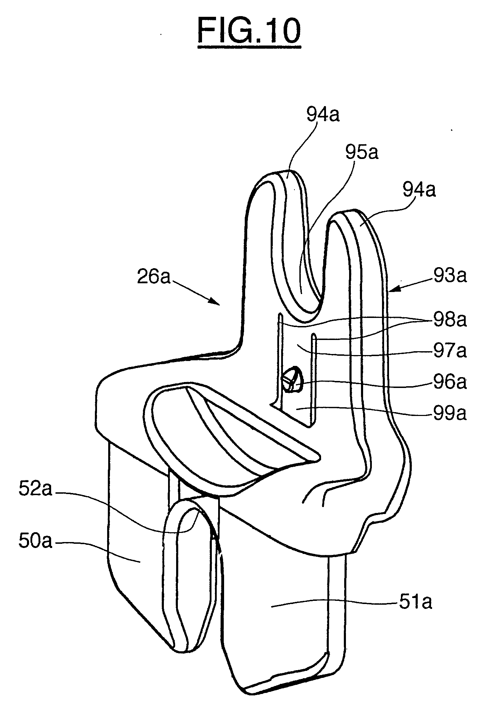

Sur la figure 10, l'élément d'accrochage 26a comprend une fourchette 93a orientée vers le haut, à l'opposé des ergots.

La fourchette 93a est pourvue de deux dents 94a séparées par un creux 95a pour recevoir un siège, par exemple un siège-coque, muni de moyens d'accrochage correspondants. La fourchette 93a est pourvue d'un ergot 96a en saillie latérale et d'une portion élastique 97a de support de l'ergot 96a.

La portion élastique 97a est séparée du reste de la fourchette 93a par des rainures 98a et se prolonge vers le bas pour former une tige de commande 99a dont la partie inférieure n'est pas visible sur la figure 10.

L'ergot 96a permet le blocage automatique du siège, le déblocage étant obtenu par action sur la tige de commande 99a en vue de provoquer le retrait de l'ergot 96a.

L'élément d'accrochage 26a sert ainsi d'adaptateur à des sièges de types variés.

Grâce à l'invention, on obtient un dispositif d'accrochage robuste, simple, de très haute sécurité, dû au fait que la nacelle et ses éléments d'accrochage tombent naturellement dans leurs pièces de support respectives, même si le mouvement de l'opérateur est relativement imprécis. Enfin, on accroît la faculté d'utilisation de l'utilisateur qui voit immédiatement la fonction que doit remplir la palette de verrouillage sans pouvoir la confondre avec le levier de commande d'orientation qui est situé de l'autre côté du piètement de la poussette.

## Revendications

1. Dispositif d'accrochage d'une nacelle (28) sur une poussette pour enfant, du type comprenant un châssis reposant sur des moyens de roulement et pourvu de deux pièces de support (23a, 23b) disposées de part et d'autre de la nacelle, le dispositif comprenant deux éléments d'accrochage (26a, 26b) coopérant chacun avec une pièce de support dudit châssis, chaque élément d'accrochage comprenant au moins un ergot en saillie capable de coopérer avec au moins un logement (35a, 36a) de la pièce de support, en concordance de forme avec ledit ergot,
**caractérisé par le fait que** l'ergot comprend au moins deux portions d'ergot (50a, 51a) et que le logement comprend au moins deux portions de logement.

2. Dispositif selon la revendication 1, **caractérisé par le fait que** l'ergot comprend un moyen de guidage de l'entrée de l'ergot dans le logement, sous la forme d'une portion inférieure oblique (57a, 58a) dudit ergot, la portion inférieure de l'ergot étant capable de faire saillie sous le logement.

3. Dispositif selon l'une quelconque des revendications précédentes, **caractérisé par le fait que** l'ergot comprend un moyen de blocage de l'ergot dans le logement, sous la forme d'une portion supérieure cylindrique dudit ergot.

4. Dispositif selon l'une quelconque des revendications précédentes, **caractérisé par le fait que** les pièces de support comprennent un moyen de guidage latéral de l'entrée de l'ergot dans le logement, sous la forme d'une lèvre (41a) s'étendant à partir d'un bord supérieur de la pièce de support vers le haut et vers le centre de la nacelle, et des surfaces de guidage (67a, 68a) longitudinal disposées de chaque côté de l'ergot, et que les éléments d'accrochage comprennent un moyen de guidage latéral de l'entrée de l'ergot dans le logement, sous la forme de portions biseautées (59a) disposées sur une face latérale.

5. Dispositif selon l'une quelconque des revendications précédentes, **caractérisé par le fait que** les éléments d'accrochage comprennent une protubérance latérale (60a) du côté du châssis coopérant avec un creux (34a) de la pièce de support de façon à limiter le jeu entre la nacelle et le châssis, les protubérances latérales étant de forme arrondie pour faciliter leur entrée dans leurs creux respectifs.

6. Dispositif selon l'une quelconque des revendications précédentes, **caractérisé par le fait qu'**il comprend des moyens de commande de moyens de verrouillage de l'élément d'accrochage sous la forme d'un bouton de commande (71a) à actionnement linéaire prévu avec une position inactive et une position active enfoncée maintenant les moyens de verrouillage déverrouillés tant que l'élément d'accrochage reste disposé dans le logement de la pièce de support.

7. Dispositif selon l'une quelconque des revendications précédentes, **caractérisé par le fait que** les pièces de support comprennent des moyens de commande de moyens de verrouillage disposés du côté de la nacelle et comprenant une palette (25a) articulée sur ladite pièce de support et dont le basculement commande le verrouillage et le déverrouillage de l'élément d'accrochage.

8. Dispositif selon la revendication 7, **caractérisé par le fait qu'**au moins un élément d'accrochage comprend au moins un creux (62a) formé sur une paroi latérale d'un ergot et prévu pour coopérer avec un moyen de verrouillage comprenant au moins une protubérance (46a) solidaire de la palette et capable de faire saillie à travers un perçage d'un bord d'un logement de la pièce de support, dans ledit logement.

9. Dispositif selon la revendication 8, **caractérisé par le fait que** la protubérance est biseautée de façon que l'entrée de l'ergot dans le logement correspondant provoque le retrait de la protubérance et le basculement de la palette.

10. Dispositif selon l'une quelconque des revendications précédentes, par le fait que les pièces de support comprennent un dispositif de basculement de la nacelle équipé de moyens de commande (24a, 24b) montés de part et d'autre du châssis.

11. Dispositif selon l'une quelconque des revendications précédentes, **caractérisé par le fait qu'**au moins un des ergots d'au moins un élément d'accrochage fait saillie partiellement sous une paroi d'une extrémité d'un logement de façon à empêcher la sortie dudit ergot de son logement avant la sortie de l'autre ergot du même élément d'accrochage, de son logement.

12. Dispositif selon l'une quelconque des revendications précédentes, **caractérisé par le fait que** les éléments d'accrochage comprennent deux ergots supplémentaires (65a, 66a).

13. Dispositif selon l'une quelconque des revendications précédentes, **caractérisé par le fait qu'**il comprend un moyen de maintien d'un siège, sous la forme d'une fourchette en saillie vers le haut.

14. Poussette pour enfant équipée d'un dispositif d'accrochage de nacelle selon l'une quelconque des revendications précédentes.

15. Support pour enfant équipé d'un dispositif d'accrochage selon l'une quelconque des revendications 1 à 13.

## Patentansprüche

1. Vorrichtung zum Einhaken eines Wagenkastens (28) auf einem Kinderwagen vom Typ, welcher ein auf Rollmitteln ruhendes Gestell umfasst und mit zwei beiderseits des Wagenkastens angeordneten Stützteilen (23a, 23b) versehen ist, welche Vorrichtung zwei Einhakelemente (26a, 26b) umfasst, die jeweils mit einem Stützteil des Gestells zusammenwirken, wobei jedes Einhakelement wenigstens eine vorspringende Nase aufweist, welche geeignet ist, mit wenigstens einer in ihrer Form mit der Nase übereinstimmenden Aufnahme (35a, 36a) des Stützteils zusammenzuwirken, **dadurch gekennzeichnet, dass** die Nase wenigstens zwei Nasenabschnitte (50a, 51a) umfasst und dass die Aufnahme wenigstens zwei Aufnahmeabschnitte umfasst.

2. Vorrichtung nach Anspruch 1, **dadurch gekennzeichnet, dass** die Nase ein Führungsmittel für den Eintritt der Nase in die Aufnahme in Form eines schrägen unteren Abschnitts (57a, 58a) der Nase aufweist, wobei der untere Abschnitt der Nase geeignet ist unter der Aufnahme vorzustehen.

3. Vorrichtung nach einem der vorhergehenden Ansprüche, **dadurch gekennzeichnet, dass** die Nase ein Mittel zum Blockieren der Nase in der Aufnahme in Form eines zylindrischen oberen Abschnitts der Nase aufweist.

4. Vorrichtung nach einem der vorhergehenden Ansprüche, **dadurch gekennzeichnet, dass** die Stützteile ein seitliches Führungsmittel für den Eintritt der Nase in die Aufnahme in Form einer Lippe (41a), welche ausgehend von einem oberen Rand des Stützteils nach oben und zur Mitte des Wagenkastens verläuft, und beiderseits der Nase angeordnete Längsführungsflächen (67a, 68a) aufweisen, und dass die Einhakelemente ein seitliches Führungsmittel für den Eintritt der Nase in die Aufnahme in Form auf einer Seitenfläche angeordneter abgeschrägter Abschnitte (59a) aufweisen.

5. Vorrichtung nach einem der vorhergehenden Ansprüche, **dadurch gekennzeichnet, dass** die Einhakelemente eine seitliche Ausbauchung (60a) auf der Seite des Gestells aufweisen, welche mit einer Ausnehmung (34a) des Stützteils zusammenwirkt, um so das Spiel zwischen dem Wagenkasten und dem Gestell zu begrenzen, wobei die seitlichen Ausbauchungen eine abgerundete Form haben, um ihren Eintritt in die jeweiligen Ausnehmungen zu erleichtern.

6. Vorrichtung nach einem der vorhergehenden Ansprüche, **dadurch gekennzeichnet, dass** sie Mittel zur Steuerung von Verriegelungsmitteln des Einhakelements in Form eines Steuerknopfs (71a) mit linearer Betätigung aufweist, welcher mit einer inaktiven Position und einer eingedrückten aktiven Position versehen ist, welcher die Verriegelungsmittel entriegelt hält, solange das Einhakelement in der Aufnahme des Stützteils angeordnet bleibt.

7. Vorrichtung nach einem der vorhergehenden Ansprüche, **dadurch gekennzeichnet, dass** die Stützteile Mittel zur Steuerung von Verriegelungsmitteln aufweisen, welche auf der Seite des Wagenkastens angeordnet sind und eine auf das genannte Stützteil angelenkte Palette (25a) umfassen, deren Umklappen die Verriegelung und Entriegelung des Einhakelements steuert.

8. Vorrichtung nach Anspruch 7, **dadurch gekennzeichnet, dass** wenigstens ein Einhakelement wenigstens eine Ausnehmung (62a) umfasst, welche auf einer seitlichen Wand einer Nase geformt ist und mit einem Verriegelungsmittel zusammenwirken soll, welches wenigstens eine Ausbauchung (46a) aufweist, die mit der Palette fest verbunden ist, und geeignet ist, durch eine Bohrung eines Rands einer Aufnahme des Stützteils in die Aufnahme vorzuragen.

9. Vorrichtung nach Anspruch 8, **dadurch gekennzeichnet, dass** die Ausbauchung derart abgeschrägt ist, dass der Eintritt der Nase in die zugehörige Aufnahme das Zurückziehen der Ausbauchung und das Umklappen der Palette hervorruft.

10. Vorrichtung nach einem der vorhergehenden Ansprüche, **dadurch gekennzeichnet, dass** die Stützteile eine Vorrichtung zum Umklappen des Wagenkastens umfassen, welche mit beiderseits des Gestells montierten Steuermitteln (24a, 24b) versehen ist.

11. Vorrichtung nach einem der vorhergehenden Ansprüche, **dadurch gekennzeichnet, dass** wenigstens eine der Nasen wenigstens eines der Einhakelemente teilweise unter einer Wand eines Endes einer Aufnahme hervorragt, um so den Austritt der Nase von ihrer Aufnahme vor dem Austritt des anderen Nase des gleichen Einhakelements von ihrer Aufnahme zu verhindern.

12. Vorrichtung nach einem der vorhergehenden Ansprüche, **dadurch gekennzeichnet, dass** die Einhakelemente zwei zusätzliche Vorsprünge (65a, 66a) umfassen.

13. Vorrichtung nach einem der vorhergehenden Ansprüche, **dadurch gekennzeichnet, dass** sie ein Mittel zum Halten eines Sitzes in Form einer nach oben vorstehenden Gabel aufweist.

14. Kinderwagen, ausgestattet mit einer Vorrichtung zum Einhaken eines Wagenkastens nach einem der vorhergehenden Ansprüche.

15. Kindertrage, ausgestattet mit einer Vorrichtung zum Einhaken eines Wagenkastens nach einem der Ansprüche 1 bis 13.

## Claims

1. Device for attaching a body (28) to a child's pushchair, of the type comprising a chassis resting on rolling means and provided with two mounting pieces (23a, 23b) arranged one on either side of the body, the device comprising two attachment elements (26a, 26b) each one cooperating with one mounting piece of the said chassis, each attachment element comprising at least one projecting lug capable of cooperating with at least one housing (35a, 36a) of the mounting piece, shaped appropriately for the said lug, **characterized in that** the lug comprises at least two lug portions (50a, 51a) and **in that** the housing comprises at least two housing portions.

2. Device according to Claim 1, **characterized in that** the lug comprises a means of guiding the entry of the lug into the housing, in the form of an oblique lower portion (57a, 58a) of the said lug, the lower portion of the lug being capable of projecting out from beneath the housing.

3. Device according to any one of the preceding claims, **characterized in that** the lug comprises a means of immobilizing the lug in the housing, this means being in the form of a cylindrical upper portion of the said lug.

4. Device according to any one of the preceding claims, **characterized in that** the mounting pieces comprise a means for laterally guiding the entry of the lug into the housing, this means being in the form of a lip (41a) extending from the upper edge of the mounting piece upwards and towards the centre of the body, and surfaces (67a, 68a) for longitudinal guidance which are arranged one on each side of the lug, and **in that** the attachment elements comprise a means for laterally guiding the entry of the lug into the housing, this means being in the form of bevelled portions (59a) arranged on one lateral face.

5. Device according to any one of the preceding claims, **characterized in that** the attachment elements comprise a lateral protrusion (60a) on the chassis side that cooperates with a recess (34a) in the mounting piece so as to limit the clearance between the body and the chassis, the lateral protrusions having a rounded shape to make it easier for them to enter their respective recesses.

6. Device according to any one of the preceding claims, **characterized in that** it comprises means of operating locking means for the attachment element, these being in the form of a linearly-manipulated operating button (71a) designed with an inactive position and a pushed-in active position that keeps the locking means unlocked as long as the attachment element remains in the housing of the mounting piece.

7. Device according to any one of the preceding claims, **characterized in that** the mounting pieces comprise means of operating locking means, these being arranged on the body side and comprising a tab (25a) articulated to the said mounting piece and which when tilted allows the attachment element to be locked and unlocked.

8. Device according to Claim 7, **characterized in that** at least one attachment element comprises at least one recess (62a) formed on a lateral wall of a lug and designed to cooperate with a locking means that comprises at least one protrusion (46a) integral with the tab and capable of projecting into a housing in the mounting piece through a hole in the edge of the said housing.

9. Device according to Claim 8, **characterized in that** the protrusion is bevelled so that entry of the lug into the corresponding housing pushes the protrusion aside and makes the tab tilt.

10. Device according to any one of the preceding claims, **characterized in that** the mounting pieces comprise a device for tilting the body, this device being equipped with operating means (24a, 24b) mounted some on each side of the chassis.

11. Device according to any one of the preceding claims, **characterized in that** at least one of the lugs of at least one attachment element projects partially out beneath a wall of one end of a housing so as to prevent the said lug from coming out of its housing before the other lug of the same attachment element comes out of its housing.

12. Device according to any one of the preceding claims, **characterized in that** the attachment elements comprise two additional lugs (65a, 66a).

13. Device according to any one of the preceding claims, **characterized in that** it comprises a means for holding a seat, in the form of a fork projecting upwards.

14. Child's pushchair equipped with a body-attachment device according to any one of the preceding claims.

15. Support for a child, equipped with an attachment device according to any one of Claims 1 to 13.
